**Europäisches Patentamt**

**European Patent Office**

**Office européen des brevets**

(19)

(11) Veröffentlichungsnummer: **0 234 374**
A2

(12) # EUROPÄISCHE PATENTANMELDUNG

(21) Anmeldenummer: **87101687.9**

(22) Anmeldetag: **07.02.87**

(51) Int. Cl.³: **B 01 D 37/00**
B 01 D 23/24, B 01 D 23/26

(30) Priorität: **14.02.86 DE 3604773**

(43) Veröffentlichungstag der Anmeldung:
**02.09.87 Patentblatt 87/36**

(84) Benannte Vertragsstaaten:
**ES FR GB IT SE**

(71) Anmelder: **BAYERISCHE MOTOREN WERKE
Aktiengesellschaft
Postfach 40 02 40
D-8000 München 40(DE)**

(72) Erfinder: **Brandstetter, Hermann
Schwindkirchen 30c
D-8250 Dorfen 1(DE)**

(74) Vertreter: **Bücken, Helmut
Bayerische Motoren Werke Aktiengesellschaft Postfach
40 02 40 Petuelring 130 - AJ-30
D-8000 München 40(DE)**

(54) **Verfahren zum Reinigen eines Flüssigkeitsstromes und Vorrichtung zu seinem Durchführen.**

(57) Bei Behandlungsbädern, z. B. von Stahl oder Blechen, ist es bekannt, deren Konzentration ständig zu überwachen. Hierzu muß ein vom Badschlamm gereinigter Flüssigkeitsstrom zu der Überwachungsapparatur geführt werden. Bisher hat man dies dadurch erreicht, daß ein Volumenstrom dem Bad entnommen wurde, über ein vertikal stehendes Filter geleitet und der benötigte Flüssigkeitsstrom zur Untersuchung auf der einen Seite des Filters abgenommen wurde. Aufgrund der Anordnung des Filters setzte sich dies sehr schnell zu. Erfindungsgemäß wird dies dadurch verhindert, daß das Filter horizontal liegend angeordnet ist und der Flüssigkeitsstrom entgegen der Schwerkraft geführt wird und daß nur noch ein wesentlich geringerer Teil als bisher das Filterelement durchströmt. Die durchströmte Menge ist abhängig von der benötigten zu untersuchenden Flüssigkeitsmenge.

EP 0 234 374 A2

Verfahren zum Reinigen eines Flüssigkeitsstromes und Vorrichtung zu seinem Durchführen

Die vorliegende Erfindung bezieht sich auf ein Verfahren der im Oberbegriff des ersten Anspruchs angegebenen Art sowie auf eine Vorrichtung zur Durchführung des Verfahrens.

Es ist allgemein bekannt, daß bei Behandlungsbädern, insbesondere für Werkstücke, die Badzusammensetzung dauernd überwacht werden muß. Hierzu war es bisher üblich, einen Teil des Flüssigkeitsstromes vom Bad abzupumpen und durch ein vertikal angeordnetes Filterelement, welches horizontal angeströmt wurde, durchzuleiten. Auf der Reinseite des Filterelementes wurde dann ein Teil dieses Stromes zu der Meßvorrichtung geführt. Der andere Teil wurde zurück ins Bad geleitet. Die DE-OS 24 25 251 beschreibt beispielsweise ein derart angeordnetes Filterelement.

Nachteilig bei dieser Anordnung ist es, daß sich das Filterelement in einigen Betriebsstunden zugesetzt hat, so daß ein Reinigungsvorgang notwendig war. Dies bedeutete aber auch ein Stillsetzen des Bades, da in der Zwischenzeit eine Überwachung der Badzusammensetzung nicht möglich war.

Aufgabe der vorliegenden Erfindung ist es, die eingangs beschriebenen Nachteile zu vermeiden.

Die Aufgabe wird erfindungsgemäß durch die kennzeichnenden Merkmale des ersten Anspruchs gelöst. Die Lösung basiert auf der

2

Erkenntnis, daß das Filterelement waagerecht liegt und entgegen der Schwerkraft angeströmt werden soll. Dadurch wird erreicht, daß sich unter der Wirkung der Schwerkraft das auf der Schmutzseite des Filterelementes angesammelte Material absenken kann und fortgespült wird. Das Filterelement oder der Druck auf der Reinseite des Filterelementes wird hierbei so ausgelegt, daß nur noch eine geringe Menge des Flüssigkeitsstromes durch das Filterelement tritt. Die Menge wird hierbei so bemessen, daß sie ausreichend groß ist, um die notwendigen Analysierverfahren durchführen zu können. Durch die beschriebene Art des Reinigens wird die Standzeit des Filterelementes auf mehrere Wochen erhöht, da zum einen weniger Flüssigkeit gefiltert werden muß und zum anderen eine Selbstreinigung aufgrund der erfindungsgemäßen Anströmrichtung und Lage des Filterelementes eintritt.

Die Merkmale des Anspruchs 2 beschreiben eine vorteilhafte Reinigungsmöglichkeit des Filters. Aufgrund der Drucklosschaltung der Schmutzseite des Filters, drückt die auf der Reinseite vorhandene Flüssigkeit entgegengesetzt der Durchströmrichtung durch das Filterelement und schwemmt die dort vorhandenen Partikel zurück ins Bad.

Die Merkmale des Anspruchs 3 beschreiben eine weitere Reinigungsmöglichkeit für das Filterelement. Hierdurch kann eine weitere Erhöhung der Standzeit der Filteranlage erreicht werden, da die vorgeschlagene Reinigungsart sehr gründlich ist.

Die Merkmale des Anspruchs 4 beschreiben eine zur Durchführung des Verfahrens geeignete Anordnung.

Um bei der erfindungsgemäßen Anordnung die irgendwann einmal notwendige Spülung des Filterelementes vornehmen zu können, werden die Merkmale des Anspruchs 5 vorgeschlagen.

Im folgenden wird die Erfindung anhand eines bevorzugten Ausführungsbeispiels näher beschrieben.

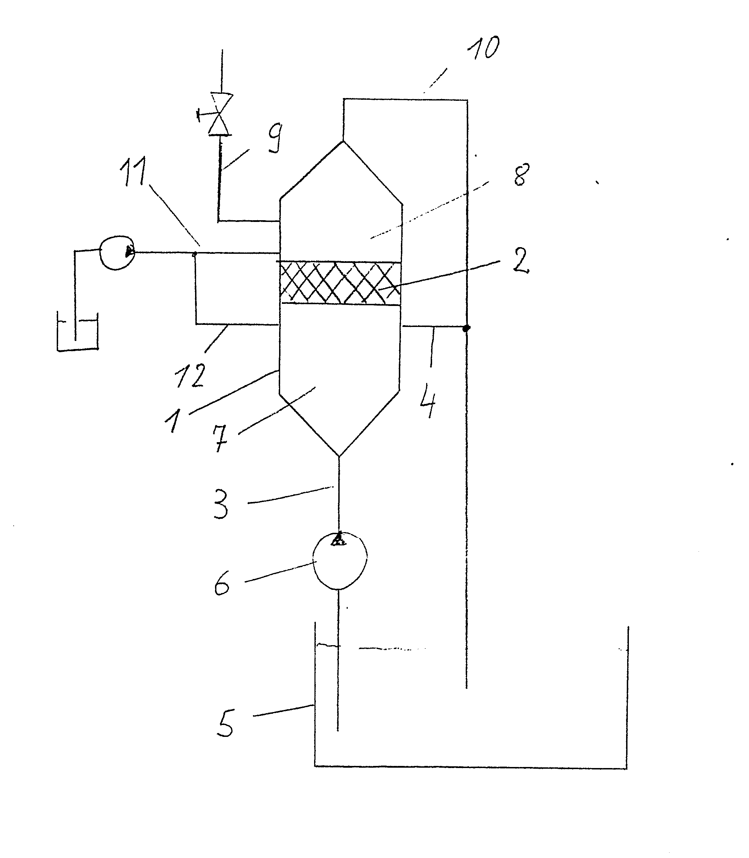

In der einzigen Abbildung ist schematisch der Aufbau einer erfindungsgemäßen Filtereinrichtung dargestellt. Sie besteht im wesentlichen aus dem Gehäuse 1, in dem ein in Abhängigkeit der Zusammensetzung des zu filternden Flüssigkeitsstromes entsprechendes Filterelement 2 angeordnet ist. Das Gehäuse 1 ist stehend angeordnet, so daß das Filterelement 2 horizontal liegend vorgesehen ist. Dementsprechend ist der Zulauf 3 des Flüssigkeitsstromes unterhalb des Filterelementes 2 angeordnet. Da erfindungsgemäß der Filter nicht vollständig durchströmt werden soll, ist der Ablauf 4 vor dem Filter angeordnet. Die Flüssigkeit wird also aus einem Bad 5 über eine Pumpe 6 über den Zulauf 3 in das Gehäuse 1 geleitet, und dort in den Schmutzraum 7 und weiter über den Abfluß 4 zurück zum Bad 5. Ein Teil des Flüssigkeitsstromes durchdringt das Filterelement 2 und gelangt in dem über dem Filterelement angeordneten Reinraum 8, von wo es über die Ablaufleitung 9 zu der nicht weiter dargestellten Analyseapparatur geleitet wird. Ferner ist noch an dem Reinraum ein Überlauf 10 angeschlossen, der den nicht benötigten gereinigten Flüssigkeitsstrom zurück ins Bad 5 leitet.

Aufgrund dieser Anordnung setzt sich der mit dem Flüssigkeitsstrom geförderte Schlamm vor dem Filterelement 2 ab. Aufgrund seines Gewichtes und der ständigen Zuführung von Flüssigkeit wird der Schlamm nicht das Filterelement 2 verstopfen, sondern über den Abfluß 4 zurück zum Bad gefördert. Unterstützt wird dies dadurch, daß nur eine geringe Menge des angelieferten Flüssigkeitsstromes das Filterelement 2 durchströmt. Aufgrund dieser Anordnung konnte eine wesentliche Erhöhung der Standzeit des Filterelementes erzielt werden. So trug die Standzeit bei bisher horizontal durchströmtem Filterelement nur wenige Stunden. Aufgrund der erfindungsgemäßen Anordnung konnte diese bei gleichem Verschmutzungsanteil der Flüssigkeit auf mehrere Wochen erstreckt werden.

Eine weitere Erhöhung der Standzeit des Filterelementes 2 läßt sich dadurch erreichen, daß sowohl unter- als auch oberhalb des

4

Filterelementes 2 Spülwasseranschlüsse 11, 12 vorgesehen sind, über die ein separater Spülzyklus gefahren werden kann.

Eine andere Möglichkeit der Reinigung des Filterelementes 2 besteht darin, daß der Schmutzraum 7 drucklos geschaltet wird und daß die in dem Reinraum 8 und dem Ablauf 9 vorhandene Flüssigkeit in umgekehrter Strömungsrichtung das Filterelement 2 durchströmt.

Patentansprüche

1. Verfahren zum Reinigen eines Flüssigkeitsstromes mit Hilfe von Filtern, dadurch gekennzeichnet, daß der gesamte Flüssigkeitsstrom entgegen der Schwerkraft gegen das horizontal liegende Filterelement gelenkt und an diesem, ohne es vollständig zu durchströmen, abgelenkt wird und daß nur ein Teil des Flüssigkeitsstromes den Filter entgegen der Schwerkraft durchströmt.

2. Verfahren nach Anspruch 1, dadurch gekennzeichnet, daß zum Reinigen des Filterelementes der Zulauf des Flüssigkeitsstromes drucklos geschaltet wird.

3. Verfahren nach Anspruch 1 oder 2, dadurch gekennzeichnet, daß zum Reinigen des Filterelementes zumindest auf seiner Reinseite Spülwasser eingeleitet wird.

4. Vorrichtung zur Durchführung des Verfahrens, bestehend aus einem in einem Gehäuse angeordneten Filterelement sowie aus Zu- und Ablaufanschlüssen für die zu reinigende Flüssigkeit, dadurch gekennzeichnet, daß das Filterelement (2) horizontal angeordnet ist, daß der Zulaufanschluß (3) unterhalb des Filterelementes (2) und daß zwei Ablaufanschlüsse (4,9) vorgesehen sind, wobei der eine in der Nähe und unterhalb des Filterelementes (2) und der andere oberhalb des Filterelementes (2) angeordnet ist.

5. Vorrichtung nach Anspruch 4,
dadurch gekennzeichnet, daß ober- und unterhalb des Filterelementes (2) Spülwasseranschlüsse (11,12) vorgesehen sind.